# EUROPÄISCHE PATENTSCHRIFT

(11) **EP 2 153 095 B1**
(45) Veröffentlichungstag und Bekanntmachung des Hinweises auf die Patenterteilung: **07.09.2011**
(21) Anmeldenummer: 08707495.1
(22) Anmeldetag: 01.02.2008
(51) Int. Cl.: F16K 27/00, F16K 31/42, F16K 35/00

(54) **VENTILEINRICHTUNG MIT HANDHILFSBETÄTIGUNGSEINRICHTUNG**
VALVE DEVICE WITH MANUAL, AUXILIARY ACTUATING MECHANISM
SYSTEME DE SOUPAPE COMPORTANT UN DISPOSITIF D'ACTIONNEMENT MANUEL AUXILIAIRE

(43) Veröffentlichungstag der Anmeldung: 17.02.2010
(73) Patentinhaber: FESTO AG & Co. KG, 73734 Esslingen (DE)
(72) Erfinder: BERNER, Michael, 73230 Kirchheim (DE); MACK, Reinhold, 73773 Aichwald (DE)
(74) Vertreter: Abel, Martin
(86) Internationale Anmeldenummer: PCT/EP2008/000809
(87) Internationale Veröffentlichungsnummer: WO 2009/095037

(56) Entgegenhaltungen:
- US-A- 6 155 287
- US-A1- 2005 236 053

## Beschreibung

Die Erfindung betrifft eine Ventileinrichtung, ausgebildet für nichtmanuelle Ansteuerung und ausgestattet mit mindestens einer Handhilfsbetätigungseinrichtung, die ein manuell betätigbares Betätigungsglied aufweist und im betätigten Zustand lösbar verriegelbar ist, wobei dem Betätigungsglied ein bewegliches Abdeckelement zugeordnet ist, das wahlweise in einer das Betätigungsglied zum Verhindern eines die verriegelung des betätigten Zustandes bezweckenden Zugriffes abdeckenden Abdeckstellung oder in einer das Betätigungsglied für einen solchen Zugriff zugänglich machenden Freigabestellung positionierbar ist, und wobei Sperrmittel vorhanden sind, die im betätigten und hierbei verriegelten Zustand der Handhilfsbetätigungseinrichtung ein Bewegen des in der Freigabestellung befindlichen Abdeckelementes in die Abdeckstellung unmöglich machen und die mindestens einen an dem Abdeckelement angeordneten ersten Sperrkörper und mindestens einen als Bestandteil der Handhilfsbetätigungseinrichtung ausgebildeten zweiten Sperrkörper aufweisen, wobei der erste Sperrkörper beim Ändern der Stellung des Abdeckelementes entlang einer Bewegungsbahn verlagert wird und der zweite Sperrkörper bei unbetätigter Handhilfsbetätigungseinrichtung außerhalb dieser Bewegungsbahn angeordnet ist und bei betätigter und verriegelter Handhilfsbetätigungseinrichtung in diese Bewegungsbahn ragt und dadurch einen das Verlagern in die Abdeckstellung verhindernden Bewegungsanschlag für das Abdeckelement bildet.

Eine aus der EP 1 508 732 A1 bekannte Ventileinrichtung ist für nichtmanuelle Ansteuerung ausgelegt und wird normalerweise durch elektrische Betätigungssignale angesteuert, die eine elektronische Steuereinrichtung liefert. Mittels zweier Handhilfsbetätigungseinrichtungen ist zudem eine von den elektrischen Betätigungssignalen unabhängige manuelle Betätigung der Ventileinrichtung möglich, auf die vor allem in Verbindung mit Einrichtungs- und Wartungsarbeiten zurückgegriffen wird. Jede Handhilfsbetätigungseinrichtung umfaßt ein Betätigungsglied, das manuell zwischen einem unbetätigten und einem die Ventileinrichtung aktivierenden betätigten Zustand verschiebbar ist. Bei Bedarf kann der betätigte Zustand durch eine Verriegelung vorübergehend dauerhaft fixiert werden, ohne dass ständig eine manuelle Beaufschlagung notwendig wäre. Mit dieser verriegelungsmöglichkeit ist allerdings die Problematik verbunden, dass nach Beendigung der Wartungsarbeiten das Entriegeln und Zurückschalten des Betätigungsgliedes in die unbetätigte Stellung eventuell vergessen wird, sodass ein durch die angeschlossene elektronische Steuereinrichtung nicht änderbarer Schaltzustand der Ventileinrichtung vorliegt. Besonders kritisch ist diese Problematik bei mit vielen Ventileinrichtungen ausgestatteten Maschinen oder Anlagen, weil es dort sehr zeitraubend und eventuell auch sehr schwierig ist, die Ventileinrichtung mit der versehentlich nicht deaktivierten Handhilfsbetätigungseinrichtung zu ermitteln.

In der DE 20 2005 014 397 U1 hat man zur Behebung dieser Problematik eine zusätzliche fluidische Schaltung vorgeschlagen, die bei der elektrischen Aktivierung der Ventileinrichtung ein fluidisches Drucksignal erzeugt, durch das die Handhilfsbetätigungseinrichtung bei Initiierung der nichtmanuellen Ansteuerung automatisch in den unbetätigten Zustand zurückgeschaltet wird. Diese Bauform lässt sich allerdings nur mit speziell ausgelegten Handhilfsbetätigungseinrichtungen realisieren, was den Aufbau verteuert.

Aus der US 6 155 287 A ist eine Ventileinrichtung der eingangs genannten Art bekannt, die eine Handhilfsbetätigungseinrichtung aufweist, die über ein in einer betätigbaren Stellung verriegelbares Betätigungselement verfügt. Um ein unerwünschtes Betätigen zu verhindern, kann eine Abdeckung über das Betätigungselement geschwenkt werden. Sicherungsmittel in Form eines an der Abdeckung angeordneten Vorsprungs sorgen dafür, dass die Abdeckung nur dann über das Betätigungselement schwenkbar ist, wenn dieses eine unbetätigte Stellung einnimmt.

Es ist die Aufgabe der vorliegenden Erfindung, Maßnahmen vorzuschlagen, mit denen sich auf einfache Weise dem Problem einer versehentlich nicht deaktivierten Handhilfsbetätigungseinrichtung begegnen lässt.

Zur Lösung dieser Aufgabe ist vorgesehen, dass der zweite Sperrkörper in einem Innenraum eines Grundkörpers der Ventileinrichtung angeordnet ist, in den eine Durchgangsöffnung einmündet, in die der erste Sperrkörper eintaucht, wenn das Abdeckelement aus der Freigabestellung in die Abdeckstellung bewegt wird, wobei der zweite Sperrkörper bei im betätigten Zustand verriegelter Handhilfsbetätigungseinrichtung in dem Innenraum derart vor die Durchgangsöffnung ragt, dass er in der Bewegungsbahn des ersten Sperrkörpers zu liegen kommt.

Dadurch kann dem Problem einer versehentlich nicht zurückgeschalteten Handhilfsbetätigungseinrichtung auf einfache und dennoch wirksame Weise begegnet werden. Im unbetätigten Zustand der Handhilfsbetätigungseinrichtung kann das Betätigungsglied durch ein bewegliches Abdeckelement derart abgedeckt werden, dass ein Zugriff auf das Betätigungsglied entweder vollständig oder zumindest derart verhindert ist, dass keine Verriegelung des betätigten Zustandes durchgeführt werden kann. Das Abdeckelement verhindert hierbei den Zugriff entweder vollständig oder in einer Weise, dass zwar ein tastendes, sich selbst wieder zurückstellendes Betätigen, nicht jedoch ein verriegelndes Betätigen möglich ist. Ist eine Betätigung mit Verriegelung gewünscht, muss zuvor das Betätigungsglied freigelegt werden, indem das Abdeckelement aus der Abdeckstellung in die Freigabestellung bewegt wird. Die Sperrmittel verhindern, dass das Abdeckelement anschließend wieder in die Freigabestellung zurückbewegt werden kann, solange der verriegelte Zustand vorliegt. Man kann daher anhand eines sich in der Freigabestellung befindenden Abdeckelementes sehr leicht optisch verifizieren, dass eine Handhilfsbetätigungseinrichtung noch nicht deaktiviert wurde. Bei Bedarf könnte zusätzlich eine elektrische Abfrage der Stellung des Abdeckelementes stattfinden, um die Einnahme der Freigabestellung durch ein elektrisches Signal anzuzeigen, das man dann auch einer elektronischen Steuereinrichtung zur weiteren Verarbeitung zuleiten kann. Die kostengünstigste Variante sieht allerdings vor, nur die visuell erfassbare Stellung des Abdeckelementes als optische Anzeigemaßnahme heranzuziehen.

Die Sperrmittel enthalten mindestens einen an dem Abdeckelement angeordneten und dessen Bewegung mitmachenden ersten Sperrkörper und mindestens einen zur Handhilfsbetätigungseinrichtung gehörenden zweiten Sperrkörper. Der zweite Sperrkörper ist derart mit dem Betätigungsglied bewegungsgekoppelt, dass er bei im betätigten Zustand verriegelter Handhilfsbetätigungseinrichtung in die Bewegungsbahn des ersten Sperrkörpers ragt und im nichtverriegelten Zustand der Handhilfsbetätigungseinrichtung außerhalb der Bewegungsbahn angeordnet ist. Dadurch fungiert der zweite Sperrkörper bei verriegelter Handhilfsbetätigungseinrichtung als Anschlag bezüglich dem ersten Sperrkörper und verhindert, dass das Abdeckelement in die Abdeckstellung bewegt wird. Ein Grundkörper der Ventileinrichtung weist eine Durchgangsöffnung auf, die zu einem Innenraum führt, in dem sich der zweite Sperrkörper befindet. In der Sperrstellung ragt der zweite Sperrkörper derart innen vor die Durchgangsöffnung, dass er in der Bewegungsbahn des ersten Sperrkörpers zu liegen kommt.

vorteilhafte Weiterbildungen der Erfindung gehen aus den Unteransprüchen hervor.

Das Abdeckelement könnte beispielsweise als linear oder rotativ beweglicher Schieber ausgebildet sein. Als besonders vorteilhaft wird allerdings eine Ausgestaltung als schwenkbar gelagerte Abdeckklappe angesehen, da sich hier eine optisch besonders markante Freigabestellung verwirklichen lässt. Es ist insbesondere vorgesehen, dass das Abdeckelement in der Abdeckstellung an eine Stirnfläche eines das Betätigungsglied enthaltenden Grundkörpers der Ventileinrichtung herangeschwenkt ist und in der Freigabestellung von dieser Stirnfläche wegragt, beispielsweise in einem Winkel von etwa 90°.

Die Freigabestellung kann durch Anschlagmittel sehr leicht vorgegeben werden.

Damit die Abdeckstellung auch bei Erschütterungen zuverlässig beibehalten bleibt, können Rastmittel vorhanden sein, die ein lösbares Verrasten der Abdeckklappe in der Abdeckstellung ermöglichen.

Der zweite Sperrkörper ist zweckmäßigerweise unmittelbar am Betätigungsglied der Handhilfsbetätigungseinrichtung angeordnet, wobei er zwischen seiner unwirksamen Stellung und seiner wirksamen Sperrstellung verschwenkt wird, wenn das Betätigungsglied zum Verriegeln und Entriegeln des betätigten Zustandes verdreht wird.

Bei dem ersten Sperrkörper handelt es sich insbesondere um einen vom Abdeckelement wegragenden Vorsprung. Es kann insbesondere stiftförmig ausgebildet sein.

Ein und dieselbe Ventileinrichtung kann gleichzeitig mehrere und insbesondere zwei Handhilfsbetätigungseinrichtungen aufweisen, die jeweils ein eigenes Betätigungsglied enthalten. Hier kann dann prinzipiell jedem Betätigungsglied ein eigenes Abdeckelement mit entsprechenden Sperrmitteln zugeordnet sein. Wesentlich kostengünstiger ist jedoch eine Variante, bei der den Betätigungsgliedern der mehreren Handhilfsbetätigungseinrichtungen ein Abdeckelement gemeinsam zugeordnet ist. Dieses kann nur dann in eine bezüglich beiden Betätigungsgliedern eingeommene Abdeckstellung verlagert werden, wenn sich keine der beiden Handhilfsbetätigungseinrichtungen in einem betätigten und zugleich verriegelten Zustand befindet.

Eine für elektrische Ansteuerung ausgelegte Ventileinrichtung enthält zweckmäßigerweise ein mit einem Hauptventilschieber ausgestattetes Hauptventil, zu dessen fluidischer Betätigung ein oder zwei elektrisch betätigbare Vorsteuerventile vorhanden sind. Die normale Betätigung erfolgt mittels Betätigungssignalen, die den Vorsteuerventilen von einer elektronischen Steuereinrichtung zugeführt werden. Die vorhandene mindestens eine Handhilfsbetätigungseinrichtung ermöglicht eine manuelle Betätigung des Hauptventils auch bei elektrisch nicht betätigtem Vorsteuerventil. Hierbei kann das Betätigungsglied der Handhilfsbetätigungseinrichtung je nach Auslegung der Ventileinrichtung entweder mit einem Vorsteuerventil oder direkt mit dem Hauptventil oder, was als besonders zweckmäßig angesehen wird, mit einem zusätzlichen Hilfsventil zusammenarbeiten. Das Hilfsventil gehört zur Handhilfsbetätigungseinrichtung und lässt sich durch das Betätigungsglied derart manuell schalten, dass es unabhängig vom Betriebszustand des zugeordneten Vorsteuerventils eine ein Umschalten bewirkende Fluidbeaufschlagung des Hauptventils hervorruft.

Nachfolgend wird die Erfindung anhand der beiliegenden Zeichnung näher erläutert. In dieser zeigen:
- Figur 1: eine schematische Seitenansicht einer bevorzugten Ausführungsform der erfindungsgemäßen Ventilein- richtung, die mit zwei Handhilfsbetätigungseinrich- tüngen ausgestattet ist, die hier wegen der besse- ren Darstellbarkeit übereinander liegend abgebildet sind, obgleich sie in der Realität gemäß Figuren 2 bis 7 bevorzugt nebeneinander liegen,
- Figur 2: eine Vorderansicht der Ventileinrichtung aus Fi- gur 1 mit Blickrichtung gemäß Pfeil II bei in der Abdeckstellung befindlichem Abdeckelement,
- Figur 3: einen Längsschnitt durch den in Figur 1 strichpunk- tiert umrahmten Bereich gemäß Schnittlinie III-III aus Figuren 2 und 4,
- Figur 4: einen Querschnitt gemäß Schnittlinie IV-IV mit ei- ner Rückansicht der Betätigungsglieder entgegenge- setzt zu der Richtung des Pfeils II aus Figur 1,
- Figur 5: eine Vorderansicht der Ventileinrichtung mit Blick- richtung gemäß Pfeil II bei in die Freigabestellung verschwenktem Abdeckelement,
- Figur 6: einen Längsschnitt durch den in Figur 1 strichpunk- tiert umrahmten Ausschnitt gemäß Schnittlinie VI-VI aus Figuren 5 und 8,
- Figur 7: einen Längsschnitt durch den in Figur 1 umrahmten Bereich gemäß Schnittlinie VII-VII aus Figuren 5 und 8, und
- Figur 8: einen Querschnitt gemäß Schnittlinie VIII-VIII in Figuren 6 und 7 in einer der Figur 4 entsprechenden Darstellungsweise.

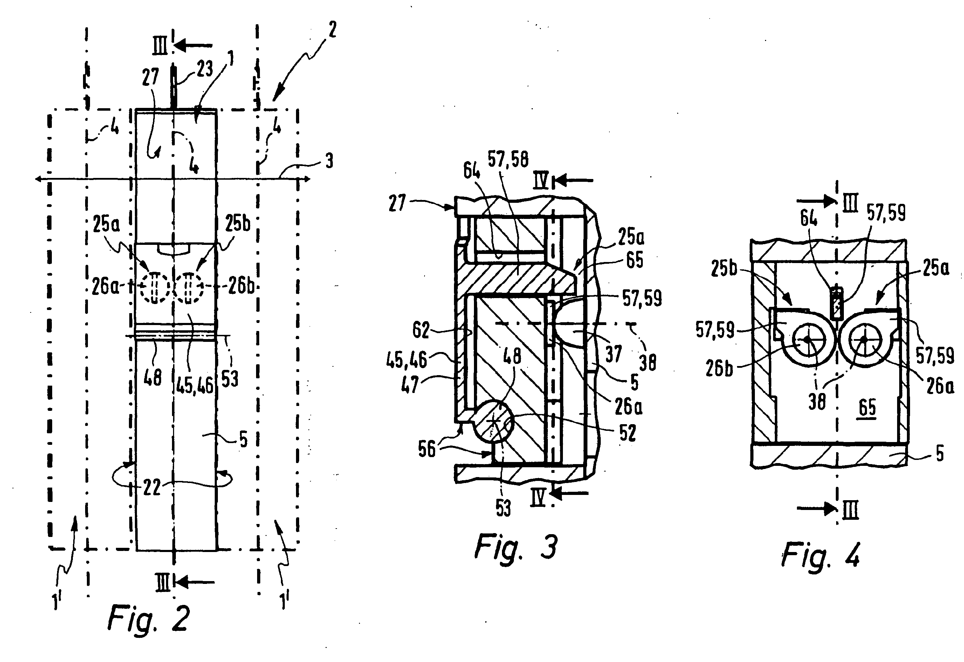

Aus der Zeichnung geht eine insgesamt mit Bezugsziffer 1 bezeichnete Ventileinrichtung hervor, die im Wesentlichen plattenförmig gestaltet ist und die gemäß Figur 2 mit weiteren dort strichpunktiert angedeuteten plattenförmigen Ventileinrichtungen 1' zu einer Ventilbaugruppe 2 zusammengefasst werden kann. Innerhalb der Ventilbaugruppe 2 sind die Ventileinrichtungen 1, 1' in einer durch einen Doppelpfeil angedeuteten Aufreihungsrichtung 3 Seite an Seite aufeinanderfolgend angeordnet, wobei ihre Fiauptausdehnungsebenen 4 parallel zueinander verlaufen.

Die Ventileinrichtung 1 enthält einen die Hauptausdehnungsebene 4 vorgebenden plattenförmigen Grundkörper 5, der mehrteilig aufgebaut sein kann. Bevorzugt enthält er einen Hauptkörper 6, in den ein Hauptventil 7 integriert ist und der mit zwei der Betätigung des Hauptventils 7 dienenden Vorsteuerventilen 8 bestückt ist.

Das Hauptventil 7 enthält eine sich in der Hauptausdehnungsebene 4 erstreckende Schieberaufnahme 12, in der ein nur strichpunktiert angedeuteter Ventilschieber 13 beweglich aufgenommen ist. In die beiden Endabschnitte der Schieberaufnahme 12 mündet jeweils einer von zwei im Grundkörper 5 verlaufenden Vorsteuerkanälen 14a, 14b, über die der Hauptventilschieber 13 axial mit einem Steuerfluid beaufschlagbar ist, um ihn gemäß Doppelpfeil 15 zwischen seinen möglichen Schaltstellungen umzuschalten.

Die Schieberaufnahme 12 kommuniziert mit einem Speisekanal 16 und zwei Abführkanälen 17, sowie ferner mit zwei Arbeitskanälen 18. Je nach Schaltstellung des Hauptventilschiebers 13 ist der eine Arbeitskanal 18 mit dem Speisekanal 16 verbunden, während der jeweils andere Arbeitskanal 18 gleichzeitig mit einem der Abführkanäle 17 in Verbindung steht. Auf diese Weise kann ein an die Arbeitskanäle 18 angeschlossener Verbraucher, beispielsweise ein fluidisch betätigbarer Antrieb, betätigt werden.

Der Speisekanal 16 steht mit einer Druckquelle in Verbindung, die Abführkanäle 17 mit einer Drucksenke, insbesondere mit der Atmosphäre. Der Speisekanal 16 und die Abführkanäle 17 sind insbesondere als den Grundkörper 5 in der Aufreihungsrichtung 3 durchsetzende Kanäle ausgebildet, sodass sie an den beiden in der Aufreihungsrichtung 3 orientierten großflächigen Seitenflächen 22 des Grundkörpers 5 ausmünden. Indem die angesetzten weiteren Ventileinrichtungen 1' entsprechende Durchgangskanäle aufweisen, können die Ventilbaugruppe 2 in der Aufreihungsrichtung 3 durchziehende Kanalsysteme realisiert werden, die eine gemeinsame Fluidversorgung und Fluidabfuhr bezüglich sämtlichen Ventileinrichtungen 1 ermöglichen.

Die Arbeitskanäle 18 sind für jede Ventileinrichtung 1 individuell vorgesehen und münden an einer der Schmalseiten des Grundkörpers 5 aus, exemplarisch an der Unterseite.

Die Vorsteuerventile 8 sind als elektrisch ansteuerbare bzw. betätigbare Ventile ausgebildet. Sie empfangen ihre elektrischen Betätigungssignale über Schnittstellenmittel 23 von mindestens einer nicht weiter dargestellten elektronischen Steuereinrichtung, die extern angeordnet oder in die Ventilbaugruppe 2 integriert sein kann. Bei den Vorsteuerventilen 8 handelt es sich vorzugsweise um Magnetventile oder um Piezoventile.

Vorzugsweise sind die Vorsteuerventile 8 als 3/2-Wegeventile ausgeführt. Eingangsseitig sind sie jeweils an einen Vorsteuer-Speisekanal 23 angeschlossen, über den das schon erwähnte Steuerfluid zugeführt wird. Exemplarisch stehen die Vorsteuer-Speisekanäle 23 mit dem Speisekanal 16 des Hauptventils 7 in Verbindung, um daraus als Steuerfluid fungierendes Druckmedium abzuzweigen.

Bei dem Druckmedium handelt es sich im Übrigen vorzugsweise um Druckluft. Allerdings ist ein Betrieb auch mit anderen gasförmigen Medien oder mit Flüssigmedien möglich.

Jedes Vorsteuerventil 8 weist außerdem eine durch einen Pfeil angedeutete Ablassöffnung 24 auf, die bei pneumatischem Druckmedium zur Atmosphäre führt.

Schließlich kommuniziert ein Ausgang jedes Vorsteuerventils 8 mit einem der beiden schon erwähnten Vorsteuerkanäle 14a, 14b.

Jedes Vorsteuerventil 8 kann wahlweise eine von zwei Schaltstellungen einnehmen, wobei es entweder zur Fluidbeaufschlagung des Hauptventilschiebers 13 den Vorsteuerkanal 14a, 14b mit dem zugeordneten Vorsteuer-Speisekanal 23 verbindet oder zur Druckentlastung des Hauptventilschiebers 13 den Vorsteuerkanal 14a, 14b mit der Ablassöffnung 24 in Verbindung setzt.

Während die Ventileinrichtung 1 des Ausführungsbeispiels für nichtmanuelle elektrische Ansteuerung ausgelegt ist, wäre auch eine Ausführungsform mit nichtmanueller fluidischer Ansteuerung denkbar. Hier könnten die Vorsteuerventile 8 entfallen und fluidische Steuersignale zur Betätigung des Hauptventils 7 von extern zugeführt werden. Auch eine direkte elektrische Betätigung des Hauptventils 7, ohne elektrischefluidische Signalwandlung wie beim Ausführungsbeispiel, wäre möglich.

Im normalen Betrieb wird die Ventileinrichtung 1 nicht manuell angesteuert, auf der Basis von Steuersignalen, die von einer elektronischen Steuereinrichtung generiert werden. Beim Einrichten einer durch die Ventileinrichtung 1 zu betätigenden Maschine oder in Verbindung mit Reparatur- oder Wartungsarbeiten ist jedoch oftmals eine Betätigungsmöglichkeit für das Hauptventil 7 gewünscht, die von den nichtmanuellen, regulären Ansteuerungsmaßnahmen unabhängig ist. Zu diesem Zweck ist die Ventileinrichtung 1 mit zwei sogenannten Handhilfsbetätigungseinrichtungen 25a, 25b ausgestattet. Diese ermöglichen ein Umschalten des Hauptventils 7 wenn die Vorsteuerventile 8 nicht betätigt sind und folglich die Vorsteuerkanäle 14a, 14b von den Vorsteuer-Speisekanälen 23 abgetrennt und mit der Ablassöffnung 24 verbunden sind. Es handelt sich bei den Vorsteuerventilen also folglich bevorzugt um Ventile des Typs "normalerweise geschlossen".

Die beiden im Folgenden als erste und zweite Handhilfsbetätigungseinrichtung 25a, 25b bezeichneten Handhilfsbetätigungseinrichtungen enthalten jeweils ein erstes bzw. zweites für manuelle Betätigung ausgelegtes Betätigungsglied 26a, 26b. Diese Betätigungsglieder 26a, 26b sind im Grundkörper 5 im Bereich einer dessen quer zur Aufreihungsrichtung 3 orientierten Stirnflächen angeordnet, die im Folgenden zur besseren Unterscheidung als vordere Stirnfläche 27 bezeichnet sei.

Durch die beiden Handhilfsbetätigungseinrichtungen 25a, 25b kann der Hauptventilschieber 13 in jeweils einer seiner beiden möglichen Umschaltrichtungen umgeschaltet werden. Wird der Hauptventilschieber 13 durch Federmittel in eine seiner beiden Schaltstellungen vorgespannt, kann zur Betätigung auf eines der Vorsteuerventile 8 und auch auf eine der beiden Handhilfsbetätigungseinrichtungen 25a, 25b verzichtet werden.

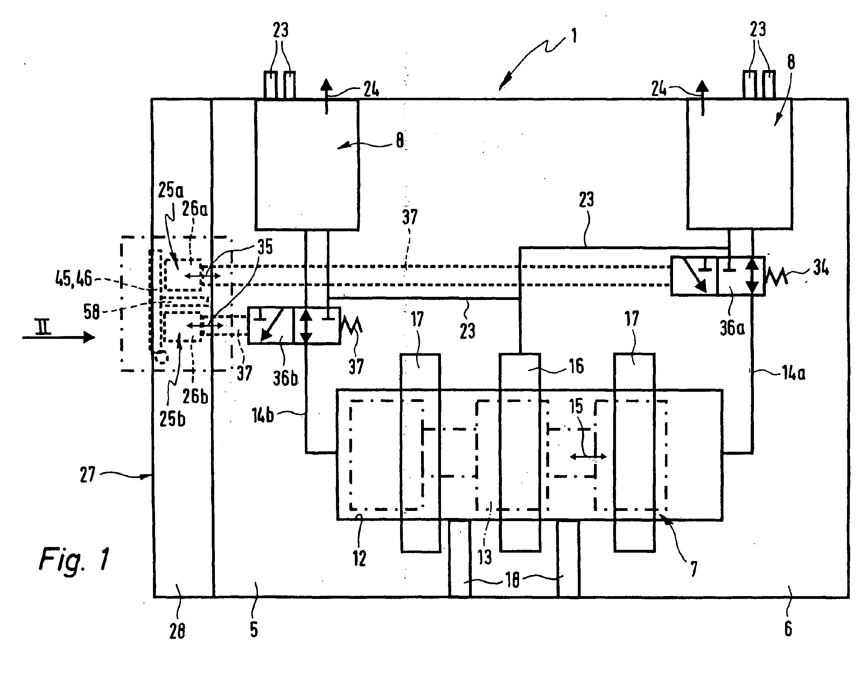

Bevorzugt sind die beiden Betätigungsglieder 26a, 26b in direkter Nachbarschaft zueinander angeordnet. Bevorzugt liegen sie in der Aufreihungsrichtung 3 nebeneinander, auf dieser Basis erfolgt auch die weitere Beschreibung. Eine hiervon abweichende Plazierung ist jedoch ebenfalls möglich, bespielsweise mit einem höhenmäßigen Versatz wie es in Figur 1 zum Ausdruck kommt. Bei dem höhenmäßigen Versatz können die Betätigungsglieder 26a, 26b in einer gemeinsamen, zur Aufreihungsrichtung 3 rechtwinkeligen Ebene liegen oder in zwei in der Aufreihungsrichtung 3 zueinander versetzten Ebenen.

Der Grundkörper 5 enthält beim Ausführungsbeispiel einen an den Hauptkörper 6 angesetzten Abschlusskörper 28, der die vordere Stirnfläche 27 definiert. Er nimmt auch die beiden Betätigungsglieder 26a, 26b auf, die jeweils in einer zur vorderen Stirnfläche 27 ausmündenden bohrungsartigen Ausnehmung 32 mit wenigstens einem Teil ihrer Länge aufgenommen sind. Jedes Betätigungsglied 26a, 26b verfügt über einen Betätigungsabschnitt 33 an der der vorderen Stirnfläche 27 zugewandten äußeren Stirnfläche. Exemplarisch ist hier jeweils ein Querschlitz eingebracht, der das Ansetzen eines von Hand geführten Schraubendrehers ermöglicht.

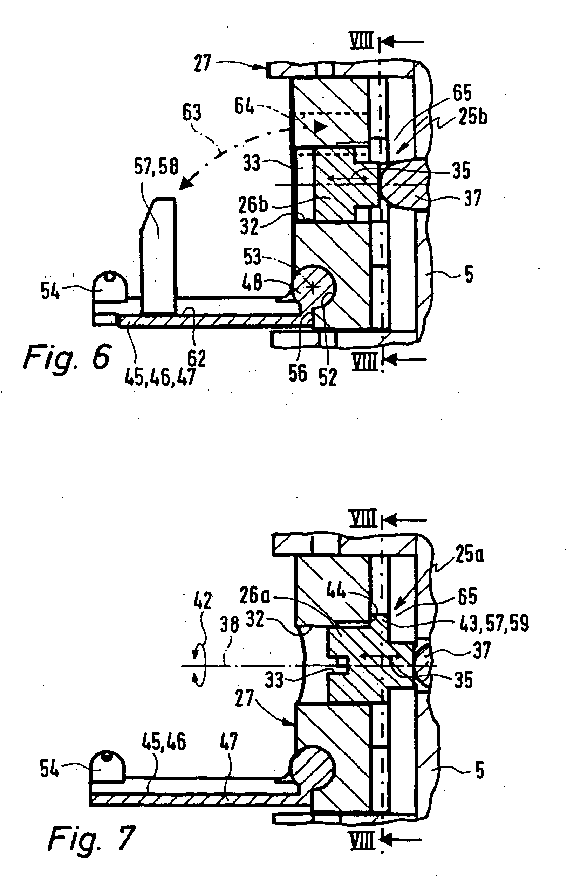

Die Betätigungsglieder 26a, 26b sind in ihrer Ausnehmung 32 jeweils rechtwinkelig zu der vorderen Stirnfläche 27 linear verschiebbar aufgenommen. Durch mittelbar oder unmittelbar auf sie einwirkende Federmittel 34 sind sie in einen aus Figuren 3 und 6 ersichtlichen unbetätigten Zustand nach axial außen vorgespannt. Durch Aufbringen einer axialen Drückkraft auf den Betätigungsabschnitt 33 kann jedes Betätigungsglied 26a, 26b in einen betätigten Zustand verlagert werden, bei dem es gemäß Figur 7 tiefer als im unbetätigten Zustand im Grundkörper 5 angeordnet ist.

Beim Verlagern in die betätigte Stellung werden die Federmittel 34 komprimiert. Wird anschließend die schiebende Betätigungskraft weggenommen, kehrt das Betätigungsglied 26a, 26b durch die Rückstellkraft der Federmittel 34 in die unbetätigte Stellung zurück.

Diese beim Ausführungsbeispiel rein lineare Umschaltbewegung ist in der Zeichnung bei 35 durch einen Doppelpfeil angedeutet.

Beim Ausführungsbeispiel ist die Anordnung so getroffen, dass die Betätigungsglieder 26a, 26b in der unbetätigten Stellung bündig mit der vorderen Stirnfläche 27 verlaufen. In der betätigten Stellung nehmen sie eine bezüglich der vorderen Stirnfläche 27 versenkte Stellung ein.

Die erwähnten Federmittel 34 können unmittelbar an den Betätigungsgliedern 26a, 26b angreifen. Beim Ausführungsbeispiel ist ein nur mittelbares Zusammenwirken vorgesehen. Hier beaufschlagen die Federmittel 34 das Ventilglied eines zu einer jeweiligen Handhilfsbetätigungseinrichtung 25a, 25b gehörenden ersten bzw. zweiten Hilfsventils 36a, 36b, das sich über einen Antriebsstößel 37 an der inneren Stirnfläche des jeweils zugeordneten Betätigungsgliedes 26a, 26b abstützt.

Die Federmittel 34 drücken die Ventilglieder der Hilfsventile 36a, 36b in eine aus Figur 1 ersichtliche Grundstellung, in der die Betätigungsglieder 26a, 26b gleichzeitig ihre unbetätigte Stellung einnehmen.

Die Hilfsventile 36a, 36b sind in jeweils einen der beiden Vorsteuerkanäle 14a, 14b eingeschaltet und an einen der Vorsteuer-Speisekanäle 23 angeschlossen. Sie sind als Zweistellungsventile ausgebildet, wobei sie in ihrer Grundstellung den Fluiddurchgang durch den Vorsteuerkanal 14a, 14b freigeben. In dieser Grundstellung findet die nichtmanuelle reguläre Ansteuerung der Ventileinrichtung 1 statt.

Das Umschalten eines Betätigungsgliedes 26a, 26b in seine betätigte Stellung bewirkt ein gleichzeitiges Umschalten des zugeordneten Hilfsventils 36a, 36b in eine als Arbeitsstellung bezeichenbare zweite Schaltstellung. Hier ist dann eine fluidische Verbindung geschaffen zwischen dem Vorsteuer-Speisekanal 23 und dem zwischen dem Hilfsventil 36a, 36b und dem Hauptventil 7 verlaufenden Kanalast des Vorsteuerkanals 14a, 14b. Dies führt unabhängig vom Schaltzustand des zugeordneten Vorsteuerventils 8 zu einer Beaufschlagung des Hauptventilschiebers 13 mit Steuerfluid und folglich zu einem manuell hervorgerufenen Umschalten des Hauptventils 7.

Durch Drücken und anschließendes wieder Loslassen kann ein Betätigungsglied 26a, 26b rein tastend betätigt werden, wobei es den betätigten Zustand nur solange einnimmt, wie es von der manuellen Betätigungskraft beaufschlagt wird. Darüber hinaus besteht aber die Möglichkeit, jedes Betätigungsglied 26a, 26b im betätigten Zustand lösbar zu verriegeln, sodass dieser betätigte Zustand auch nach dem Wegnehmen der manuellen Betätigungskraft beibehalten wird, bis anschließend wieder eine aktive Entriegelung des betätigten Zustandes stattfindet.

Zweckmäßigerweise sind die Handhilfsbetätigungseinrichtungen 25a, 25b zur Drehverriegelung ausgebildet. Hierzu ist jedes Betätigungsglied 26a, 26b um seine mit der Richtung der Umschaltbewegung 35 zusammenfallende Längsachse 38 gemäß Doppelpfeil 42 drehbar.

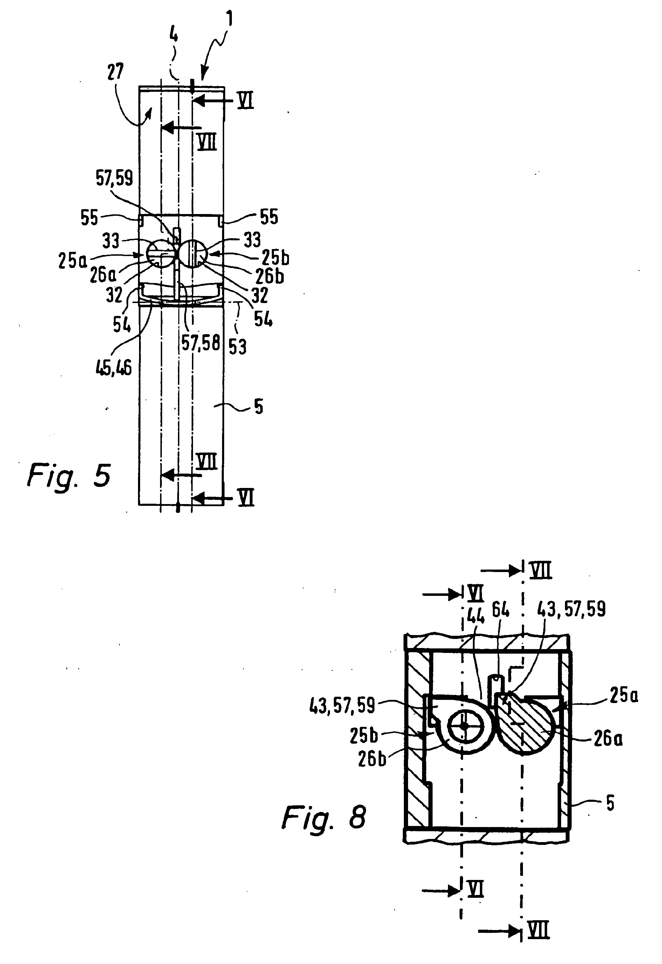

Zum Verriegeln wird das Betätigungsglied 26a, 26b bei Einnahme der axial nach innen gedrückten betätigten Stellung verdreht, sodass ein von ihm radial abstehender Verriegelungsvorsprung 43 eine am Grundkörper 5 vorhandene, axial nach innen weisende Verriegelungsfläche 44 hintergreift. Zum Vergleich sieht man in Figur 8 das zweite Betätigungsglied 26b in der unverriegelten Drehstellung und das erste Betätigungsglied 26a in der verriegelten Drehstellung.

Das zum Verriegeln erforderliche Drehmoment wird über einen Schraubendreher eingebracht, der an den Betätigungsabschnitt 33 ansetzbar ist.

Zum Entriegeln wird das Betätigungsglied 26a, 26b wieder zurückgedreht, bis der Verriegelungsvorsprung 33 außer Eingriff mit der Verriegelungsfläche 44 gelangt, sodass dann die Federmittel 34 das Betätigungsglied 26a, 26b wieder in die unbetätigte Stellung nach außen schieben können.

Wird nach dem Abschluß von Inspektionsarbeiten oder dergleichen das Entriegeln eines Betätigungsgliedes 26a, 26b vergessen, tritt bei der anschließenden elektrischen Ansteuerung eine Fehlfunktion auf. Den Handhilfsbetätigungseinrichtungen 25a, 25b sind deshalb Mittel zugeordnet, die dem Anwender optisch signalisieren, wenn ein Betätigungsglied 26a, 26b noch verriegelt ist, und die überdies verhindern, dass eine Verriegelung ohne damit verbundene optische Signalisierung durchführbar ist. Diese Mittel enthalten ein beim Ausführungsbeispiel beiden Betätigungsgliedern 26a, 26b gemeinsam zugeordnetes Abdeckelement 45, das wahlweise in einer die Betätigungsglieder 26a, 26b abdeckenden Abdeckstellung (Figur 2 und 3) oder in einer Freigabestellung (Figur 5 bis 7) positionierbar ist. In der Abdeckstellung verhindert das Abdeckelement 45 einen die Verriegelung des betätigten Zustandes eines Betätigungsgliedes 26a, 26b bezweckenden Zugriff zu den Betätigungsgliedern 26a, 26b. In der Freigabestellung ist ein solcher Zugriff möglich.

Bevorzugt ist das Abdeckelement 45 als Abdeckklappe 46 ausgeführt, die an dem Grundkörper 5 schwenkbar gelagert ist. Sie befindet sich im Bereich der vorderen Stirnfläche 27 und verfügt über einen im Wesentlichen plattenförmigen und bevorzugt durchbrechungslosen Klappenkörper 47, der an einem Randbereich einen zumindest partiell kreiszylindrisch konturierten Lagerungsabschnitt 48 aufweist. Der Lagerungsabschnitt 48 ist in eine am Grundkörper 5 und insbesondere an dem Abschlusskörper 28 ausgebildete Aufnahme 52 derart eingerastet, dass eine zu der vorderen Stirnfläche 27 parallele Schwenkachse 53 definiert wird.

Die Aufnahme 52 ist zu den beiden Betätigungsgliedern 26a, 26b beabstandet, sodass sich die Abdeckklappe 46 derart an die vordere Stirnfläche 27 herahschwenken lässt, dass der Klappenkörper 47 gleichzeitig beide Betätigungsglieder 26a, 26b vollständig abdeckt und jeglichem Zugriff entzieht. Damit liegt die Abdeckstellung des Abdeckelementes 45 vor.

Damit die Abdeckstellung auch bei Erschütterungen beibehalten bleibt, ist die Abdeckklappe 46 in der Abdeckstellung zweckmäßigerweise bezüglich dem Grundkörper 5 lösbar verrastbar. Man erkennt zu diesem Zweck an den beiden Seitenrändern des Klappenkörpers 47 angeformte, federnd biegbare Rastarme 54, die in komplementäre Rastausnehmungen 55 des Grundkörpers 5 einrasten können, wenn die Abdeckklappe 46 in die Abdeckstellung gelangt.

Vorzugsweise schließt die Abdeckklappe 46 in der Abdeckstellung zumindest im Wesentlichen bündig mit den sich anschließenden Abschnitten der vorderen Stirnfläche 27 des Grundkörpers 5 ab.

Die Freigabestellung der Abdeckklappe 46 fällt einem Betrachter sofort ins Auge, weil der Klappenkörper 47 hier eine von der vorderen Stirnfläche 27 wegragende Position einnimmt. Miteinander kooperierende Anschlagmittel 56 an zum einen der Abdeckklappe 46 und zum anderen dem Grundkörper 5 geben die Freigabestellung vor, indem sie den Schwenkwinkel für die Abdeckklappe 46 begrenzen.

Bevorzugt sind die Anschlagmittel 56 so ausgebildet, dass der Schwenkwinkel zwischen der Abdeckstellung und der Freigabestellung weniger als 180° beträgt und insbesondere im Bereich von 90° liegt. Letzteres trifft für das Ausführungsbeispiel zu.

Zu der durch das Abdeckelement 45 verwirklichten Sicherheitsfunktion gehört auch, dass Sperrmittel 57 vorhanden sind, die verhindern, dass das Abdeckelement 45 aus der zuvor eingenommenen Freigabestellung in die Abdeckstellung bewegt werden kann, wenn wenigstens eines der beiden Betätigungsglieder 26a, 26b die betätigte Stellung einnimmt und in dieser verriegelt ist.

Dies eröffnet dem Anwender der Ventileinrichtung 1 eine sehr einfache Kontrollmöglichkeit. Befindet sich das Abdeckelement 45 in der Abdeckstellung, kann mit absoluter Sicherheit davon ausgegangen werden, dass sich die zugeordneten Handhilfsbetätigungseinrichtungen 25, 25b im unbetätigten Zustand befinden.

Die Sperrmittel 57 enthalten mindestens einen an dem Abdeckelement 45 angeordneten und folglich dessen Bewegung mitmachenden ersten Sperrkörper 58. Dieser erste Sperrkörper 58 befindet sich beim Ausführungsbeispiel an der in der Abdeckstellung der vorderen Stirnfläche 27 zugewandten Innenfläche des Klappenkörpers 47 und ist von einem von dieser Innenfläche 62 in der Schwenkrichtung wegragenden Vorsprung gebildet, der zweckmäßigerweise stiftförmig gestaltet ist. Beispielhaft verfügt er über eine zur Ausdehnungsebene des Klappenkörpers 47 rechtwinkelige Längsachse.

Wird die Stellung des Abdeckelementes 45 geändert - beim Ausführungsbeispiel durch ein Verschwenken der Abdeckklappe 46 - verlagert sich der erste Sperrkörper 58 entlang einer strichpunktiert angedeuteten Bewegungsbahn 63.

Im Verlauf der Bewegungsbahn 63 befindet sich eine im Grundkörper 5 ausgebildete Durchgangsöffnung 64, die einerseits zur vorderen Stirnfläche 27 ausmündet und andererseits zu einem im Innern des Grundkörpers 5 ausgebildeten, beim Ausführungsbeispiel zwischen dem Hauptkörper 6 und dem Abschlusskörper 28 ausgebildeten Innenraum 65.

Beim Verschwenken der Abdeckklappe 64 in die Abdeckstellung taucht der erste Sperrkörper 58 in die Durchgangsöffnung 64 ein. In der aus Figur 3 ersichtlichen Abdeckstellung durchgreift der erste Sperrkörper 58 die Durchgangsöffnung 64 und ragt in den Innenraum 65 hinein.

Ein zweiter Sperrkörper 59 der Sperrmittel 57 ist an jedem Betätigungsglied 26a, 26b ausgebildet und befindet sich in dem Innenraum 65. Bei dem zweiten Sperrkörper 59 handelt es sich vorzugsweise um einen quer zur Drehachse vom betreffenden Betätigungsglied 26a, 26b wegragenden Vorsprung, der die Eigenschaft hat, bei dem zum Zwecke des Verrastens und Entrastens stattfindenden Verdrehen des Betätigungsgliedes 26a, 26b eine Schwenkbewegung um die Längsachse 38 auszuführen. Vorzugsweise sind der Verriegelungsvorsprung 43 und der zweite Sperrkörper 59 am jeweiligen Betätigungsglied 26a, 26b als Baueinheit ausgeführt.

Die Figur 8 veranschaulicht, dass der zweite Sperrkörper 59 in einer Weise angeordnet ist, dass er bei unverriegeltem Betätigungsglied (in Figur 8 links im Bild) eine unwirksame Stellung außerhalb der Bewegungsbahn 63 des ersten Sperrkörpers 58 einnimmt, während er bei verriegeltem Betätigungsglied (in Figur 8 rechts im Bild) eine Sperrstellung einnimmt, in der er in die Bewegungsbahn 63 ragt. Beim Ausführungsbeispiel äußert sich dies unter anderem auch dadurch, dass der zweite Sperrkörper 59 bei verriegeltem Betätigungsglied innen vor die Durchgangsöffnung 64 ragt, während er den Querschnitt dieser Durchgangsöffnung 64 im unverriegelten Zustand freigibt.

Wird die Abdeckklappe 46 in Richtung der Abdeckstellung verschwenkt, während gleichzeitig mindestens ein Betätigungsglied 26a, 26b eine betätigte und verriegelte Stellung einnimmt, fungiert der zweite Sperrkörper 59 des verriegelten Betätigungsgliedes 26a, 26b als Bewegungsanschlag, der verhindert, dass der erste Sperrkörper 58 in den Innenraum 65 eingreift. Es versteht sich, dass der erste Sperrkörper 58 zur Ausführung seiner Funktion mit Abstand zu der Schwenkachse 53 an der Abdeckklappe 56 angeordnet ist.

Der zweite Sperrkörper 59 ist so am zugeordneten Betätigungsglied 26a, 26b angeordnet und ausgebildet, dass beide zweiten Sperrkörper 59 gleichzeitig die Sperrstellung einnehmen können. Dadurch ist gewährleistet, dass beide Handhilfsbetätigungseinrichtungen 25a, 25b gleichzeitig im betätigten Zustand verriegelt werden können. Unabhängig davon, ob nur eines oder ob gleichzeitig beide Betätigungsglieder 26a, 26b verriegelt sind, kommt die Sperrfunktion zum Tragen.

Beim Ausführungsbeispiel ist ein einziger erster Sperrkörper 58 vorhanden, der mit den zweiten Sperrkörpern 59 beider

Betätigungsglieder 26a, 26b kooperieren kann. Hiervon abweichend ist selbstverständlich auch eine Bauform möglich, bei der jeder Handhilfsbetätigungseinrichtung 25a, 25b ein eigener erster Sperrkörper 58 zugeordnet ist, der dann nur mit dem zweiten Sperrkörper 59 von einer der beiden Handhilfsbetätigungseinrichtungen zusammenarbeiten kann.

Noch nachzutragen ist, dass die Figuren 2 bis 4 beide Handhilfsbetätigungseinrichtungen 25a, 25b in der unbetätigten Stellung zeigen, während die Figuren 5 bis 8 einen Zustand illustrieren, bei dem die erste Handhilfsbetätigungseinrichtung 25a den betätigten und zugleich verriegelten Zustand einnimmt, während die zweite Handhilfsbetätigungseinrichtung 25b unbetätigt ist.

## Patentansprüche

1. Ventileinrichtung, ausgebildet für nichtmanuelle Ansteuerung und ausgestattet mit mindestens einer Handhilfsbetätigungseinrichtung (25a, 25b), die ein manuell betätigbares Betätigungsglied (26a, 26b) aufweist und im betätigten Zustand lösbar verriegelbar ist, wobei dem Betätigungsglied (26a, 26b) ein bewegliches Abdeckelement (45) zugeordnet ist, das wahlweise in einer das Betätigungsglied (26a, 26b) zum Verhindern eines die Verriegelung des betätigten Zustandes bezweckenden Zugriffes abdeckenden Abdeckstellung oder in einer das Betätigungsglied (26a, 26b) für einen solchen Zugriff zugänglich machenden Freigabestellung positionierbar ist, und wobei Sperrmittel (57) vorhanden sind, die im betätigten und hierbei verriegelten Zustand der Handhilfsbetätigungseinrichtung (25a, 25b) ein Bewegen des in der Freigabestellung befindlichen Abdeckelementes (45) in die Abdeckstellung unmöglich machen und die mindestens einen an dem Abdeckelement (45) angeordneten ersten Sperrkörper (58) und mindestens einen als Bestandteil der Handhilfsbetätigungseinrichtung (25a, 25b) ausgebildeten zweiten Sperrkörper (59) aufweisen, wobei der erste Sperrkörper (58) beim Ändern der Stellung des Abdeckelementes (45) entlang einer Bewegungsbahn verlagert wird und der zweite Sperrkörper (59) bei unbetätigter Handhilfsbetätigungseinrichtung (25) außerhalb dieser Bewegungsbahn (63) angeordnet ist und bei betätigter und verriegelter Handhilfsbetätigungseinrichtung (25a, 25b) in diese Bewegungsbahn (63) ragt und **dadurch** einen das Verlagern in die Abdeckstellung verhindernden Bewegungsanschlag für das Abdeckelement (45) bildet, **dadurch gekennzeichnet, dass** der zweite Sperrkörper (59) in einem Innenraum (65) eines Grundkörpers (5) der Ventileinrichtung (1) angeordnet ist, in den eine Durchgangsöffnung (64) einmündet, in die der erste Sperrkörper (58) eintaucht, wenn das Abdeckelement (45) aus der Freigabestellung in die Abdeckstellung bewegt wird, wobei der zweite Sperrkörper (59) bei im betätigten Zustand verriegelter Handhilfsbetätigungseinrichtung (25a, 25b) in dem Innenraum (65) derart vor die Durchgangsöffnung (64) ragt, dass er in der Bewegungsbahn (63) des ersten Sperrkörpers (58) zu liegen kommt.

2. Ventileinrichtung nach Anspruch 1, **dadurch gekennzeichnet, dass** das Abdeckelement (45) als schwenkbar gelagerte Abdeckklappe (46) ausgebildet ist.

3. Ventileinrichtung nach Anspruch 2, **dadurch gekennzeichnet, dass** die Abdeckklappe (46) an einem Randbereich einen Lagerungsabschnitt (48) aufweist, mit dem sie in eine an einem Grundkörper (5) der Ventileinrichtung (1) ausgebildete Aufnahme (52) verschwenkbar eingerastet ist.

4. Ventileinrichtung nach Anspruch 2 oder 3, **dadurch gekennzeichnet, dass** die Abdeckklappe (46) in der Abdeckstellung bezüglich einem das Betätigungsglied (26a, 26b) aufnehmenden Grundkörper (5) der Ventileinrichtung (1) zur Lagesicherung lösbar verrastbar ist.

5. Ventileinrichtung nach einem der Ansprüche 2 bis 4, **dadurch gekennzeichnet, dass** Anschlagmittel (56) zur Vorgabe der Freigabestellung vorhanden sind, derart, dass die Abdeckklappe (46) in der Freigabestellung um weniger als 180° gegenüber der Abdeckstellung verschwenkt ist, wobei zweckmäßigerweise die Anschlagmittel (56) derart ausgebildet sind, dass der Schwenkwinkel zwischen der Abdeckstellung und der Freigabestellung im Bereich von 90° liegt.

6. Ventileinrichtung nach einem der Ansprüche 2 bis 5, **dadurch gekennzeichnet, dass** die Abdeckklappe (46) in der Abdeckstellung an eine Stirnfläche (27) eines das Betätigungsglied (26a, 26b) aufnehmenden Grundkörpers (5) der Ventileinrichtung (1) herangeschwenkt ist, während sie in der Freigabestellung von dieser Stirnfläche (27) wegragt.

7. Ventileinrichtung nach einem der Ansprüche 1 bis 6, **dadurch gekennzeichnet, dass** das Betätigungsglied (26a, 26b) von dem die Abdeckstellung einnehmenden Abdeckelement (45) vollständig abgedeckt wird.

8. Ventileinrichtung nach einem der Ansprüche 1 bis 7, **dadurch gekennzeichnet, dass** der zweite Sperrkörper (59) am Betätigungsglied (26a, 26b) der Handhilfsbetätigungseinrichtung (25a, 25b) angeordnet ist.

9. Ventileinrichtung nach Anspruch 8, **dadurch gekennzeichnet, dass** das Betätigungsglied (26a, 26b) zum Verriegeln und Entriegeln des betätigten Zustandes drehbar ausgebildet ist, wobei der zweite Sperrkörper (59) zweckmäßigerweise von einem vom Betätigungsglied (26a, 26b) quer zu dessen Drehachse wegragenden Vorsprung gebildet ist und beim Verdrehen des Betätigungsgliedes (26a, 26b) eine Schwenkbewegung ausführt.

10. Ventileinrichtung nach Anspruch 8 oder 9, **dadurch gekennzeichnet, dass** der erste Sperrkörper (58) von einem vom Abdeckelement (45) wegragenden Vorsprung gebildet ist und/oder stiftförmig vom Abdeckelement (45) wegragend ausgebildet ist.

11. Ventileinrichtung nach Anspruch 10, **dadurch gekennzeichnet, dass** der erste Sperrkörper (58) bei einem als schwenkbare Abdeckklappe (46) ausgebildeten Abdeckelement (45) an einer zur Schwenkachse (53) der Abdeckklappe (46) beabstandeten Stelle an einem plattenförmigen Klappenkörper (47) der Abdeckklappe (46) angeordnet ist und von diesem quer zu seiner Ausdehnungsebene wegragt.

12. Ventileinrichtung nach einem der Ansprüche 1 bis 11 **dadurch gekennzeichnet, dass** das Betätigungsglied (26a, 26b) zur Aktivierung der Handhilfsbetätigungseinrichtung (25a, 25b) linear verschiebbar und zur Verriegelung des betätigten Zustandes drehbar ausgebildet ist.

13. Ventileinrichtung nach einem der Ansprüche 1 bis 12, **dadurch gekennzeichnet, dass** sie mehrere Handhilfsbetätigungseinrichtungen (25a, 25b) aufweist, deren Betätigungsglieder (26a, 26b) nebeneinander angeordnet sind, wobei ihnen ein je nach Stellung die mehreren Betätigungsglieder (26a, 26b) gleichzeitig abdeckendes oder freigebendes Abdeckelement (45) gemeinsam zugeordnet ist.

14. Ventileinrichtung nach Anspruch 13, **dadurch gekennzeichnet, dass** die Sperrmittel (57) einen an dem Abdeckelement (45) angeordneten ersten Sperrkörper (58) aufweisen, der mit je einem zweiten Sperrkörper (59) mehrerer Handhilfsbetätigungseinrichtungen (25a, 25b) zusammenwirken kann, derart, dass ein Bewegen des Abdeckelementes (45) in die Abdeckstellung verhindert ist, wenn ein beliebiger der zweiten Sperrkörper (59) oder sämtliche zweiten Sperrkörper (59) gleichzeitig in die Bewegungsbahn (63) des ersten Sperrkörpers (58) ragen.

15. Ventileinrichtung nach einem der Ansprüche 1 bis 14, **dadurch gekennzeichnet, dass** sie ein Hauptventil (7) mit einem durch Fluidkraft umschaltbaren Hauptventilschieber (13) aufweist, dem zu seiner Betätigung mindestens ein elektrisch betätigbares Vorsteuerventil (8) zugeordnet ist, wobei die mindestens eine Handhilfsbetätigungseinrichtung (25a, 25b) eine Betätigung des Hauptventils (7) bei elektrisch nicht betätigtem Vorsteuerventil (8) ermöglicht, wobei die Handhilfsbetätigungseinrichtung (25a, 25b) zweckmäßigerweise ein durch das Betätigungsglied (26a, 26b) manuell derart schaltbares Hilfsventil (36a, 36b) aufweist, dass es unabhängig vom Betriebszustand des zugeordneten Vorsteuerventils (8) eine ein Umschalten des Hauptventils (7) bewirkende Fluidbeaufschlagung des Hauptventilschiebers (13) hervorruft.

## Claims

1. Valve unit, designed for non-manual activation and equipped with at least one manual auxiliary actuating device (25a, 25b), which has a manually operable actuating member (26a, 26b) and is locked releasably in the actuated state, wherein the actuating member (26a, 26b) is assigned a movable cover element (45) which may be positioned either in a covered position covering the actuating member (26a, 26b) to prevent access for the purpose of locking the actuated state, or in a release position making the actuating member (26a, 26b) accessible for such access and wherein locking means (57) are provided, which in the actuated and in this connection locked state of the manual auxiliary actuating device (25a, 25b) make impossible any movement of the cover element (45) from the covered position into the release position, and which have at least one first locking body (58) fitted to the cover element (45) and at least one second locking body (59) as an integral part of the manual auxiliary actuating device (25a, 25b) wherein, on changing the position of the cover element (45), the first locking body (58) is shifted along a movement path and the second locking body (59), with the manual auxiliary actuating device (25) unactuated, is located outside this movement path (63) and, with the manual auxiliary actuating device (25a, 25b) actuated and locked, extends into this movement path (63) and by this means forms a movement stop for the cover element (45), preventing a shift into the covered position, **characterised in that** the second locking body (59) is located in an interior (65) of a base body (5) of the valve unit (1) into which there leads a through opening (64) into which the first locking body (58) dips when the cover element (45) is moved from the release position into the covered position, wherein the second locking body (59), in the actuated state of the locked manual auxiliary actuating device (25a, 25b), extends into the interior (65) in front of the through opening (64) in such a way that it comes to lie in the movement path (63) of the first locking body (58).

2. Valve unit according to claim 1, **characterised in that** the cover element (45) is in the form of a pivotably mounted cover flap (46).

3. Valve unit according to claim 2, **characterised in that** the cover flap (46) has at an edge area a bearing section (48), by which it is pivotably snapped into a location (52) formed on a base body (5) of the valve unit (1).

4. Valve unit according to claim 2 or 3 **characterised in that** the cover flap (46) in the covered position, to secure its position, may be engaged relative to a base body (5) of the valve unit (1) which accommodates the actuating member (26a, 26b).

5. Valve unit according to any of claims 2 to 4, **characterised in that** stop means (56) for presetting the release position are provided in such a way that the cover flap (46) in the release position is swivelled around less than 180° relative to the covered position, wherein expediently the stop means (56) are so designed that the swivel angle between the covered position and the release position is approximately 90°.

6. Valve unit according to any of claims 2 to 5, **characterised in that** the cover flap (46) in the covered position is swivelled on to an end face (27) of a base body (5) of the valve unit (1) accommodating the actuating member (26a, 26b), while in the release position it extends away from this end face (27).

7. Valve unit according to any of claims 1 to 6, **characterised in that** the actuating member (26a, 26b) is covered completely by the cover element (45) in its covered position.

8. Valve unit according to any of claims 1 to 7, **characterised in that** the second locking body (59) is mounted on the actuating member (26a, 26b) of the manual auxiliary actuating device (25a, 25b).

9. Valve unit according to claim 8, **characterised in that** the actuating member (26a, 26b) is made rotatable for locking and unlocking the actuated state, wherein the second locking body (59) is formed expediently by a projection extending away from the actuating member (26a, 26b) at right-angles to its axis of rotation and executes a swivelling movement when the actuating member (26a, 26b) is turned.

10. Valve unit according to claim 8 or 9, **characterised in that** the first locking body (58) is formed by a projection extending away from the cover element (45) and/or extends away from the cover element (45) like a pin.

11. Valve unit according to claim 10 **characterised in that** the first locking body (58), in the case of a cover element (45) in the form of a pivotable cover flap (46), is mounted on a plate-like flap body (47) of the cover flap (46) at a point with clearance from the swivel axis (53) of the cover flap (46), and extends away from this flap body at right-angles to its plane of extension.

12. Valve unit according to any of claims 1 to 11, **characterised in that** the actuating member (26a, 26b), to activate the manual auxiliary actuating device (25a, 25b), is capable of linear movement and is rotatable for locking the actuated state.

13. Valve unit according to any of claims 1 to 12, **characterised in that** it has several manual auxiliary actuating devices (25a, 25b), the actuating members (26a, 26b) of which are arranged next to one another, wherein they are jointly assigned a simultaneously covering or releasing cover element (45), depending on the position of the several actuating members (26a, 26b).

14. Valve unit according to claim 13, **characterised in that** the locking means (57) have a first locking body (58) mounted on the cover element (45) and able to interact with each second locking body (59) of several manual auxiliary actuating devices (25a, 25b) in such a way that movement of the cover element (45) into the covered position is prevented when any desired second locking body (59) or all second locking bodies (59) extend(s) simultaneously into the movement path (63) of the first locking body (58).

15. Valve unit according to any of claims 1 to 14, **characterised in that** it has a main valve (7) with a main valve spool (13) switchable by fluid power and assigned for its actuation at least one electrically actuable pilot valve (8), wherein the manual auxiliary actuating device or devices (25a, 25b) allow actuation of the main valve (7) in the event of a pilot valve (8) which is not electrically actuated, wherein the manual auxiliary actuating device (25a, 25b) expediently has an auxiliary valve (36a, 36b) switchable manually by means of the actuating member (26a, 26b) in such a way that, irrespective of the operating state of the assigned pilot valve (8), it generates fluidic pressurisation of the main valve spool (13) effecting switching over of the main valve (7).

## Revendications

1. Système de soupape réalisé pour la commande non manuelle et équipé d'au moins un dispositif d'actionnement manuel auxiliaire (25a, 25b) qui présente un organe d'actionnement (26a, 26b) pouvant être actionné manuellement et peut être verrouillé de manière détachable à l'état actionné, sachant qu'à l'organe d'actionnement (26a, 26b) est associé un élément de recouvrement (45) mobile qui peut être positionné au choix dans une position de recouvrement recouvrant l'organe d'actionnement (26a, 26b) pour empêcher un accès visant au verrouillage de l'état actionné ou dans une position de libération rendant accessible l'organe d'actionnement (26a, 26b) pour un tel accès, et sachant que des moyens de blocage (57) sont prévus, lesquels rendent impossible, à l'état actionné et en même temps verrouillé du dispositif d'actionnement manuel auxiliaire (25a, 25b), un déplacement de l'élément de recouvrement (45) se trouvant en position de libération à la position de recouvrement et lesquels présentent au moins un premier corps de blocage (58) disposé sur l'élément de recouvrement (45) et au moins un second corps de blocage (59) réalisé comme une partie du dispositif d'actionnement manuel auxiliaire (25a, 25b), sachant que le premier corps de blocage (58) est déplacé lors de la modification de la position de l'élément de recouvrement (45) le long d'une voie de déplacement et le second corps de blocage (59) est disposé en dehors de cette voie de déplacement (63) lorsque le dispositif d'actionnement manuel auxiliaire (25) n'est pas actionné et pénètre dans cette voie de déplacement (63) lorsque le dispositif d'actionnement manuel auxiliaire (25a, 25b) est actionné et verrouillé et forme par là-même une butée de déplacement empêchant le déplacement dans la position de recouvrement pour l'élément de recouvrement (45), **caractérisé en ce que** le second corps de blocage (59) est disposé dans un espace intérieur (65) d'un corps de base (5) du système de soupape (1), dans lequel débouche une ouverture de passage (64), dans laquelle le premier corps de blocage (58) s'enfonce si l'élément de recouvrement (45) est déplacé de la position de libération à la position de recouvrement, sachant que le second corps de blocage (59) pénètre lorsque le dispositif d'actionnement manuel auxiliaire (25a, 25b) est verrouillé à l'état actionné dans l'espace intérieur (65) avant l'ouverture de passage (64) de telle manière qu'il vienne se placer dans la voie de déplacement (63) du premier corps de blocage (58).

2. Système de soupape selon la revendication 1, **caractérisé en ce que** l'élément de recouvrement (45) est réalisé comme un clapet de recouvrement logé de manière à pouvoir pivoter (46).

3. Système de soupape selon la revendication 2, **caractérisé en ce que** le clapet de recouvrement (46) présente sur une zone de bord une section de logement (48), avec laquelle il est encliqueté de manière pivotante dans un logement (52) réalisé sur un corps de base (5) du système de soupape (1).

4. Système de soupape selon la revendication 2 ou 3, **caractérisé en ce que** le clapet de recouvrement (46) peut être encliqueté de manière amovible dans la position de recouvrement par rapport à un corps de base (5) recevant l'organe d'actionnement (26a, 26b) du système de soupape (1) pour le blocage de la position.

5. Système de soupape selon l'une quelconque des revendications 2 à 4, **caractérisé en ce que** des moyens de butée (56) sont présents pour la prescription de la position de libération de telle manière que le clapet de recouvrement (46) soit pivoté dans la position de libération de moins de 180° par rapport à la position de recouvrement, sachant que les moyens de butée (56) sont réalisés de manière appropriée de telle manière que l'angle de pivotement entre la position de recouvrement et la position de libération s'élève à 90°.

6. Système de soupape selon l'une quelconque des revendications 2 à 5, **caractérisé en ce que** le clapet de recouvrement (46) est pivoté dans la position de recouvrement près d'une surface frontale (27) d'un corps de base (5) recevant l'organe d'actionnement (26a, 26b) du système de soupape (1) alors qu'il dépasse de cette surface frontale (27) dans la position de libération.

7. Système de soupape selon l'une quelconque des revendications 1 à 6, **caractérisé en ce que** l'organe d'actionnement (26a, 26b) est complètement recouvert par l'élément de recouvrement (45) occupant la position de recouvrement.

8. Système de soupape selon l'une quelconque des revendications 1 à 7, **caractérisé en ce que** le second corps de blocage (59) est disposé sur l'organe d'actionnement (26a, 26b) du dispositif d'actionnement manuel auxiliaire (25a, 25b).

9. Système de soupape selon la revendication 8, **caractérisé en ce que** l'organe d'actionnement (26a, 26b) est réalisé de manière rotative pour le verrouillage et le déverrouillage de l'état actionné, sachant que le second corps de blocage (59) est formé de manière appropriée par une saillie dépassant de l'organe d'actionnement (26a, 26b) transversalement à son axe de rotation et réalise un mouvement de pivotement lors de la rotation de l'organe d'actionnement (26a, 26b).

10. Système de soupape selon la revendication 8 ou 9, **caractérisé en ce que** le premier corps de blocage (58) est formé par une saillie dépassant de l'élément de recouvrement (45) et/ou est réalisé en forme de pointe dépassant de l'élément de recouvrement (45).

11. Système de soupape selon la revendication 10, **caractérisé en ce que** le premier corps de blocage (58) est disposé lorsqu'un élément de recouvrement (45) est réalisé comme clapet de recouvrement pivotant (46) à un endroit espacé de l'axe de pivotement (53) du clapet de recouvrement (46) sur un corps de clapet (47) en forme de plaque du clapet de recouvrement (46) et dépasse de celui-ci transversalement à son plan d'extension.

12. Système de soupape selon l'une quelconque des revendications 1 à 11, **caractérisé en ce que** l'organe d'actionnement (26a, 26b) est réalisé de manière mobile linéairement pour l'activation du dispositif d'actionnement manuel auxiliaire (25a, 25b) et de manière rotative pour le verrouillage de l'état actionné.

13. Système de soupape selon l'une quelconque des revendications 1 à 12, **caractérisé en ce qu'**il présente plusieurs dispositifs d'actionnement auxiliaire manuel (25a, 25b), dont les organes d'actionnement (26a, 26b) sont disposés les uns à côté des autres, sachant qu'un élément de recouvrement (45) libérant ou recouvrant selon la position les plusieurs organes d'actionnement (26a, 26b) leur est associé en commun.

14. Système de soupape selon la revendication 13, **caractérisé en ce que** les moyens de blocage (57) présentent un premier corps de blocage (58) disposé sur l'élément de recouvrement (45), lequel peut coagir avec un second corps de blocage (59) de plusieurs dispositifs d'actionnement manuel auxiliaires (25a, 25b) de telle manière qu'un déplacement de l'élément de recouvrement (45) dans la position de recouvrement soit empêché si un corps quelconque des seconds corps de blocage (59) ou tous les seconds corps de blocage (59) pénètrent simultanément dans la voie de déplacement (63) du premier corps de blocage (58).

15. Système de soupape selon l'une quelconque des revendications 1 à 14, **caractérisé en ce qu'**il présente une soupape principale (7) avec un tiroir de soupape principale (13) pouvant être commuté par une force fluidique, auquel est associée pour son actionnement au moins une soupape de précommande (8) pouvant être actionnée électriquement, sachant qu'au moins un dispositif d'actionnement manuel auxiliaire (25a, 25b) permet un actionnement de la soupape principale (7) en cas de soupape de précommande (8) non actionnée électriquement, sachant que le dispositif d'actionnement manuel auxiliaire (25a, 25b) présente de manière appropriée une soupape auxiliaire (36a, 36b) pouvant être commutée manuellement par l'organe d'actionnement (26a, 26b) de telle manière qu'elle suscite, indépendamment de l'état de fonctionnement de la soupape de précommande associée (8), une alimentation fluidique provoquant une commutation de la soupape principale (7) du tiroir de soupape principale (13).
